# EUROPEAN PATENT APPLICATION

(11) **EP 1 349 392 A2**
(43) Date of publication of application: **01.10.2003**
(21) Application number: 03005261.7
(22) Date of filing: 10.03.2003
(51) Int. Cl.: H04N 7/24

(54) **Portable information terminal, information equipment and information equipment control system based on portable information terminal**

(30) Priority: 22.03.2002 JP 2002081918
(71) Applicant: Kabushiki Kaisha Toshiba, Tokyo (JP)
(72) Inventor: Sato, Takashi, 1-1-1 Shibaura, Minato-ku Tokyo 105-8001 (JP); Yasuki, Seijiro, 1-1-1 Shibaura, Minato-ku Tokyo 105-8001 (JP)
(74) Representative: Henkel, Feiler, Hänzel

(57) **Abstract**

A portable information terminal (12) which comprises a recording unit (31) configured to record a markup language file for controlling controlled objects, a recognition unit (34) configured to recognize an addition to, a deletion from, or a change to the controlled objects, and a control unit (33) configured to change the description of the markup language file recorded in the recording unit (31) on the basis of the results of recognition by the recognition unit (34).

## Description

The present invention relates to a portable information terminal that selectively controls a plurality of pieces of information equipment using a markup language. Moreover, the present invention relates to information equipment that is controlled by a portable information terminal using a markup language. Furthermore, the present invention relates to a portable information terminal-based information equipment control system in which a portable information terminal selectively controls a plurality of pieces of information equipment using a markup language.

As is well known, in recent years a system has been developed which controls various pieces of home information equipment by radio through the use of a portable information terminal. This type of control system is disclosed in, for example, Japanese Unexamined Patent Publication No. 2000-209675.

However, the system disclosed in this Patent Publication is configured such that a portable information terminal controls various pieces of information equipment in accordance with a previously registered control method. For this reason, it is very difficult to make additions or changes to or deletions from the contents of control and the information equipment, making it inconvenient for users to handle the system.

In addition, in Japanese Unexamined Patent Publication No. 2001-86257, the control equipment is adapted to obtain equipment information from the controlled equipment whenever necessary and carry out control of the controlled equipment based on that equipment information. This allows for flexible changes to the controlled equipment.

Furthermore, in Japanese Unexamined Patent Publication No. 2001-251532, a telephone line-based data communications means is provided between a portable information terminal and a television receiver. Television operating buttons are attached to the portable information terminal. Thereby, access to the television receiver can be made by the portable information terminal in the same form of operation as with usual remote controllers.

However, the techniques described in these publications remain insufficient in many respects for application to actual equipment. For practical use, there is room to make various improvements in particulars.

It is therefore an embodiment of the present invention to provide a portable information terminal, information equipment, and a portable information terminal-based information equipment control system which allow the controlled equipment and the contents of control to be added, deleted or changed with ease, provide users with great freedom in handling, and are suitable for practical use.

According to an aspect of the present invention, there is provided a portable information terminal comprising: a recording unit configured to record a markup language file for controlling controlled objects; a recognition unit configured to recognize an addition to, a deletion from, or a change to the controlled objects; and a control unit configured to change the description of the markup language file recorded on the recording unit on the basis of the results of recognition by the recognition unit.

According to another aspect of the present invention, there is provided information equipment which is controlled by a portable information terminal having a recording unit configured to record a markup language file for controlling controlled objects, a recognition unit configured to recognize an addition to, a deletion from, or a change to the controlled objects, and a control unit configured to change the description of the markup language file recorded on the recording unit on the basis of the results of recognition by the recognition unit, comprising:
a receiving unit configured to receive control signals output from the portable information terminal; and
an operating unit configured to instruct each component to perform a predetermined operation in response to the control signal received by the receiving unit.

According to still another aspect of the present invention, there is provided a portable information terminal-based information equipment control system comprising: a portable information terminal comprising a recording unit configured to record a markup language file for controlling controlled objects, a recognition unit configured to recognize an addition to, a deletion from, or a change to the controlled objects, and a control unit configured to change the description of the markup language file recorded on the recording unit on the basis of the results of recognition by the recognition unit; and information equipment comprising a receiving unit configured to receive control signals output from the portable information terminal, and an operating unit configured to instruct each component to perform a predetermined operation in response to the control signal received by the receiving unit.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a schematic representation of a home information equipment control system according to an embodiment of the present invention;
FIG. 2 is a block diagram of that section of the home information equipment which makes radio communications with the portable information terminal in the home information equipment control system of FIG. 1;
FIG. 3 is a block diagram of that section of the portable information terminal which controls the home information equipment in the control system of FIG. 1;
FIG. 4 is a flowchart for use in explanation of the operation of the portable information terminal to control the home information equipment in the control system of FIG. 1;
FIG. 5 is a diagram for use in explanation of a controlled equipment selection menu that appears on the portable information terminal in the control system of FIG. 1;
FIG. 6 is a diagram for use in explanation of a control command selection menu that appears on the portable information terminal in the control system of FIG. 1;
FIG. 7 is a block diagram for use in explanation of that section of the portable information terminal which is necessary to change the contents of control of the home information equipment in the control system of FIG. 1;
FIG. 8 is a block diagram for use in explanation of that section of the portable information terminal which is necessary to add controllable home information equipment in the control system of FIG. 1;
FIG. 9 is a flowchart for use in explanation of the operation of the portable information terminal in the case of additions of or changes to controllable home information equipment in the control system of FIG. 1;
FIG. 10 is a diagram for use in explanation of a specific example of control of the home information equipment by the portable information terminal in the control system of FIG. 1;
FIG. 11 is a diagram for use in explanation of another specific example of control of the home information equipment by the portable information terminal in the control system of FIG. 1;
FIG. 12 is a diagram for use in explanation of still another specific example of control of the home information equipment by the portable information terminal in the control system of FIG. 1;
FIG. 13 is a diagram for use in explanation of a further specific example of control of the home information equipment by the portable information terminal in the control system of FIG. 1;
FIG. 14 is a diagram for use in explanation of a still further specific example of control of the home information equipment by the portable information terminal in the control system of FIG. 1; and
FIG. 15 is a diagram for use in explanation of a specific example of control of a charger for use with the portable information terminal by the portable information terminal in the control system of FIG. 1.

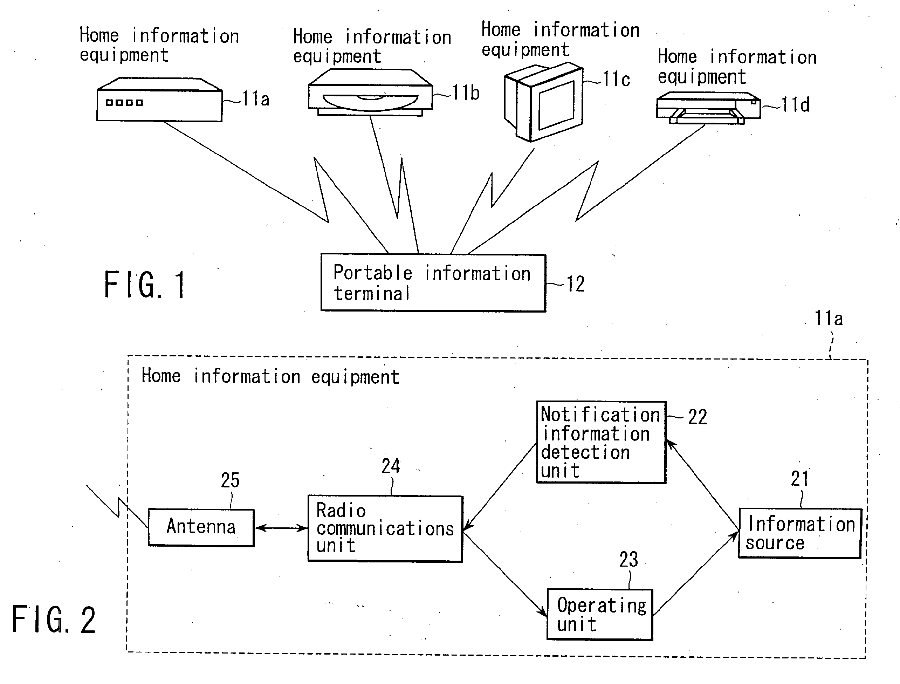

A home information equipment control system according to an embodiment of the present invention will be described with reference to the accompanying drawings. FIG. 1 schematically illustrates the home information equipment control system. In this figure, reference numerals 11a to 11d denote pieces of home information equipment each of which has an internal information source and means for making radio communication with other equipment.

Reference numeral 12 denotes a portable information terminal, which has means for making radio communication and controls the home information equipment 11a to 11d on the basis of information obtained therefrom through radio communication.
The portable information terminal 12 is, for example, a mobile TV (television) receiver and functions as a browser as well.

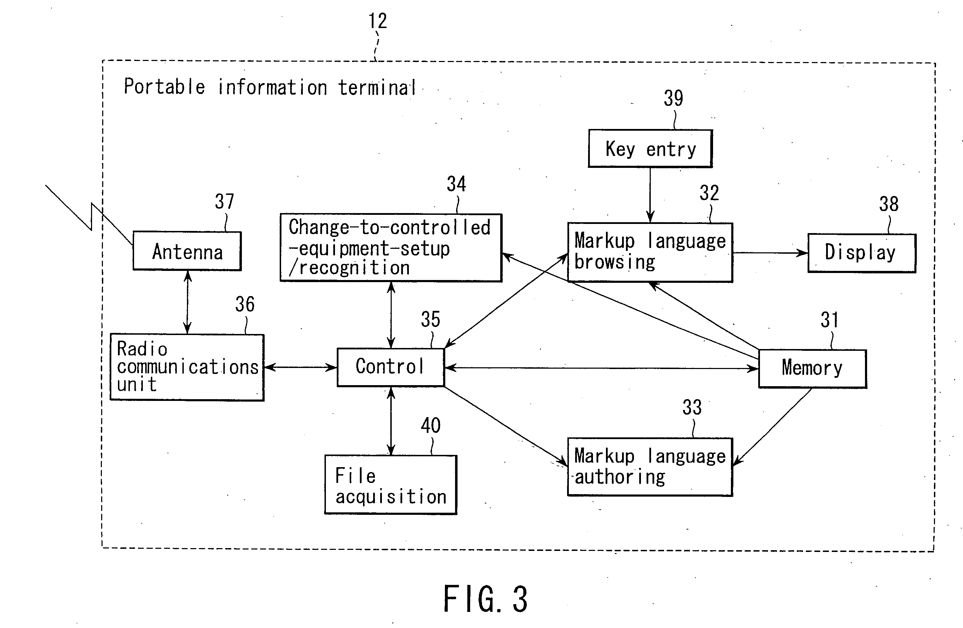

FIG. 2 shows that section of the home information equipment 11a which makes radio communication with the portable information terminal 12. The other pieces of home information equipment 11b to 11d remain unchanged in configuration from the home information equipment 11a and hence the description thereof is omitted.

Reference numeral 21 denotes an information source. Reference numeral 22 denotes a notification information detector which detects notification information issued from the information source 21. Reference numeral 23 denotes an operating unit, which issues instructions to the information source 21. Reference numeral 24 denotes a radio communications unit, which converts notification information detected by the notification information detector 22 into radio signals for transmission. Reference numeral 25 denotes an antenna for transmission and reception of radio signals.

FIG. 3 shows the details of the portable information terminal 12. Reference numeral 31 denotes a memory, which stores a markup language file and driver software to control the home information equipment 11a to 11d by radio. Reference numeral 32 denotes a markup language browsing unit, which analyzes the markup language file read from the memory 31, presents the analysis and receives user-keyed inputs.

Reference numeral 33 denotes a markup language authoring unit, which changes the description of the markup language file in the memory 31. Reference numeral 34 denotes a controlled equipment change recognizing unit, which recognizes additions, deletions and changes for the home information equipment 11a to 11d which are controlled objects.

Reference numeral 35 denotes a control unit, which writes a markup language file and driver software into the memory 31. The control unit 35 also controls the markup language browsing unit 32 to acquire user's key events. Further, the control unit 35 is responsive to information from the controlled equipment change recognizing unit 34 to instruct the markup language authoring unit 33 to change the description of the markup language file.

Reference numeral 36 denotes a radio communications unit, which transmits and receives information under the control of the control unit 35. Reference numeral 37 denotes an antenna, which exchanges radio waves with reference to the radio communications unit 36. Reference numeral 38 denotes a display unit which is comprised of, for example, a liquid crystal display. The display unit 38 provides visual presentation of information to the user as instructed by the markup language browsing unit 32.

Reference numeral 39 denotes a key entry unit, such as a software keyboard, which accepts key inputs from the user and passes them to the markup language browsing unit 32. Reference numeral 40 denotes a control file acquisition unit, which is requested by the control unit 35 to acquire various files, such as markup language files, driver files, etc., which are needed anew.

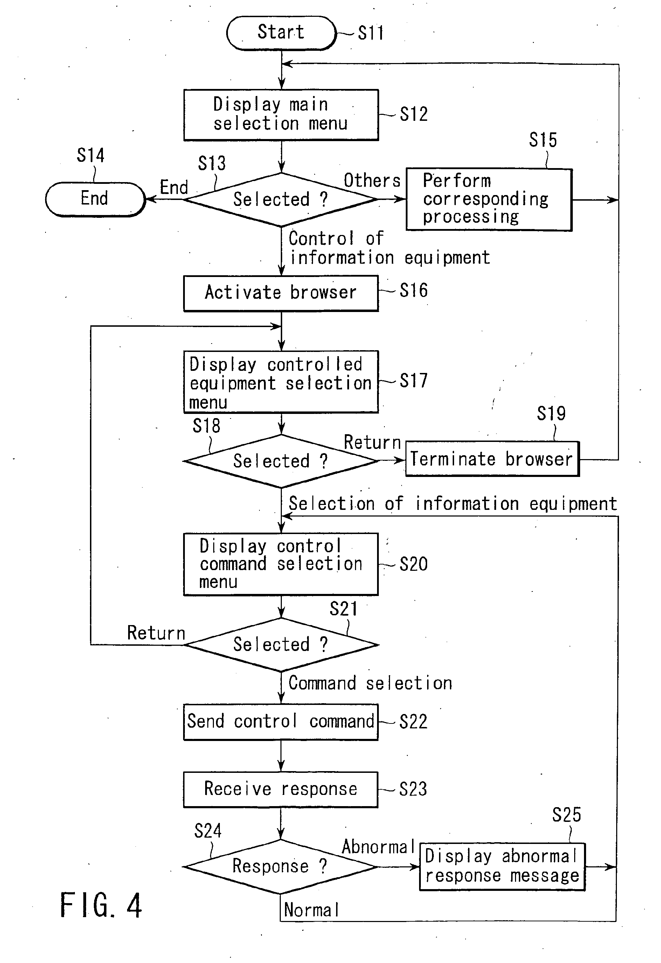

FIG. 4 is a flowchart illustrating the operation of the portable information terminal 12 to selectively control each of the pieces of home information equipment 11a to 11d. First, when the power is applied, the portable information terminal 12 starts processing (step S11). Then, the control unit 35 of the portable information terminal 12 causes the main selection menu to appear on the display unit 38 in step S12.

The control unit 35 determines, in step S13, which of functions was selected by the user from the main menu. If "END" was selected, the control unit terminates processing (step S14). If a function other than control of the home information equipment 11a to 11d is selected, the control unit 35 carries out processing corresponding to that selected function in step S15 and then returns to the processing in step S12.

If control of home information equipment was selected in step S13, the control unit 35 activates the browser function in step S16 and causes controlled equipment selection menu to appear on the display unit 38 in step S17. Through this controlled equipment selection menu, the user is allowed to select one piece of home information equipment to be controlled by the portable information terminal 12.

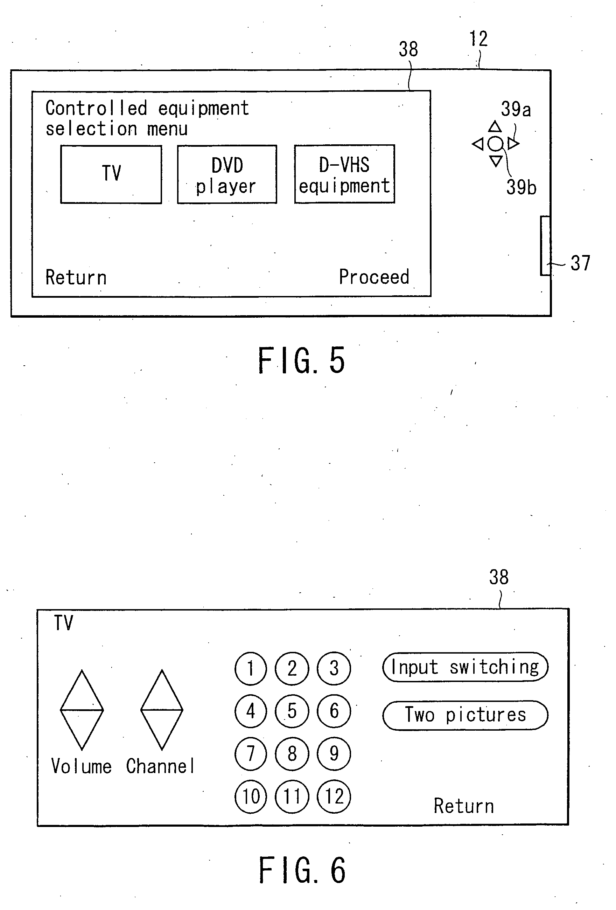

Specifically, as shown in FIG. 5, on the display unit 38 of the portable information terminal 12 there appears items indicating types of the pieces of home information equipment 11a to 11d, such as television receiver, DVD (Digital Versatile Disk) player, D-VHS (Digital Video Home System) equipment, etc. The item "RETURN" is also displayed on the controlled equipment selection menu.

In step S18, the control unit 35 determines which home information equipment was selected from the controlled equipment selection menu by the user. In this case, the method of selecting operation by the user is to, first, make a selection using directional keys 39a forming the key entry unit 39 and then decide the selection with a decision key 39b. As an alternative to this approach, a tablet may be used for direct selection.

If "RETURN" was selected in step S18, the control unit 35 terminates the browser function in step S19 and then returns to the processing in step S12. If the home information equipment 11c (television receiver) was selected in step S18, the control unit 35 causes a control command selection menu to appear on the display unit 38 in step S20. This control command selection menu allows the user to select the contents of control for the selected home information equipment 11c.

Specifically, as shown FIG. 6, on the display unit 38 of the portable information unit 12 there appear items indicating the contents of control, such as volume control, channel up/down, channel number selection, input switching, two pictures, etc., and RETURN.

In step S21, the control unit 35 determines which item of control was selected from the control command selection menu by the user. In this case, the method of selecting operation by the user is to, first, make a selection using the directional keys 39a forming the key entry unit 39 and then decide the selection with the decision key 39b. As an alternative to this approach, a tablet may be used for direct selection.

If "RETURN" was selected in step S21, the control unit 35 returns to the processing in step S17. If channel up was selected in step S21, the control unit 35 sends a control command corresponding to the selected content of control to the home information equipment 11c in step S22.

Subsequent to this process, the control unit 35 is placed in the receiving state for a response from the home information equipment 11c in step S23. When the response is received, a determination is made in step S24 as to whether the received response indicates the normal state or an abnormal or time-out state.

If the response indicates the normal state, then the CPU 35 directly returns to the processing in step S20. If the response indicates an abnormal or time-out state, on the other hand, the control unit 35 displays an abnormal response message on the display unit 38 in step S25 and then returns to step S20.

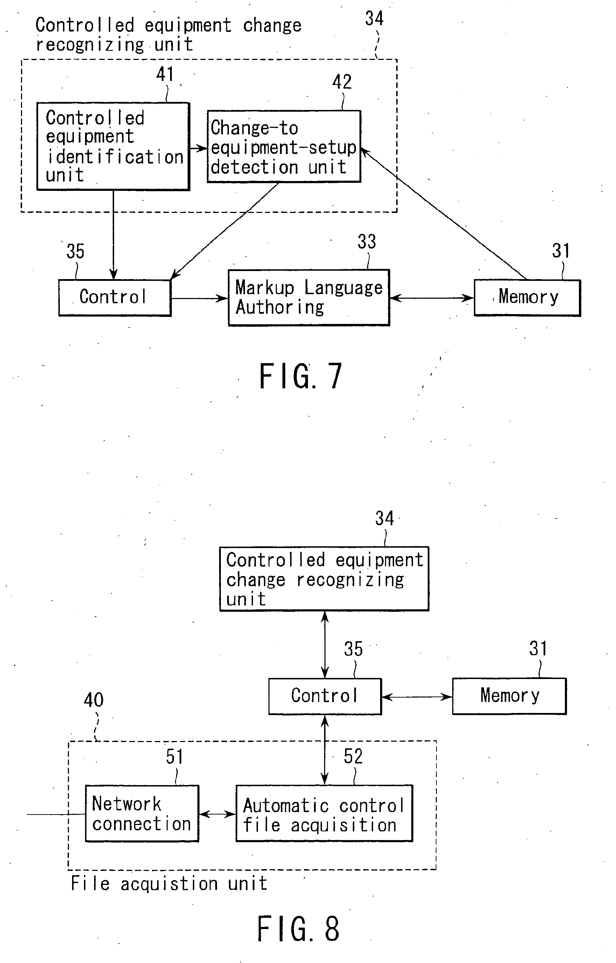

Next, the processing when home information equipment controllable by the portable information terminal 12 is changed will be described. FIG. 7 shows that section of the portable information terminal 12 which is necessary for that processing. The controlled equipment change recognizing unit 34 includes a controlled equipment identification unit 41 and a change-to-set-equipment detection unit 42.

The controlled equipment identification unit 41 extracts controlled equipment names from controlled equipment information collected by the control unit 35 through radio negotiation and then identifies pieces of controlled equipment. The change-to-equipment-setup detection unit 42 detects (identifies) portions of equipment setup that need to be changed and notifies the control unit of them by acquiring the controlled equipment names from the controlled equipment identification unit 41 and taking the difference from the description of the markup language file in the memory 31.

First, the controlled equipment identification unit 41 requests the control unit 35 to collect controlled equipment information, creates a list of controlled equipment names from obtained information, and outputs it to the change-to-equipment-setup detection unit 42.

The change-to-equipment-setup detection unit 42 then reads the markup language file from the memory 31 to extract a list of effective controlled equipment names, and compares it with the list of controlled equipment names obtained from the controlled equipment identification unit 41 to detect the names of pieces of controlled equipment which have been removed and/or added.

The control unit 35 requests the markup language authoring unit 33 to cause the change to controlled equipment setup to be reflected in the markup language.

An example of a description of the markup language file will be explained. When describing in HTML 4.0, one html file that forms the root (hereinafter referred to as the root html) and an html file for each controlled equipment name (hereinafter referred to as the sub*html) are prepared in the memory 31.

First, concerning the root html file, a *p* element is allocated to each controlled equipment and a class attribute and a CSS standard 2.0 display characteristic are appended to the *p* element. *p* elements corresponding to a maximum number of pieces of controlled equipment are prepared beforehand. If a piece of effective controlled equipment exists, *block* is set in the corresponding display characteristic and the controlled equipment name is set in the corresponding *class* attribute. Conversely, to nullify a piece of controlled equipment, a value of *none* is set in the corresponding display characteristic.

If an a element is set as a child element of each *p* element and the controlled equipment name is written therein, the name is displayed.' Each a element is added with the *href* attribute that describes the url to the sub*html corresponding to the controlled equipment name. The sub*html contains the description of a Java (registered trade mark) script corresponding to the contents of control.

Next, a description is given of the case where home information equipment controllable by the portable information terminal 12 is added. FIG. 8 shows the configuration of that section of the portable information terminal 12 which is necessary for the addition processing. The file acquisition unit 40 includes a network connection unit 51 and an automatic control file acquisition unit 52.

The network connection unit 51 has a function of connection to a predetermined server over a network. Upon receipt of a request for the addition of a new home information equipment control file from the control unit 35, the automatic control file acquisition unit 52 is automatically connected to a support server already set by the network connection unit 51 to acquire and send a control driver and a markup language file to the control unit 35.

When notified of addition of controlled equipment from the controlled equipment change recognizing unit 34, the control unit 35 checks the memory 31 for the presence or absence of a markup language file and a driver file for the controlled equipment to be added. If they are absent, the control unit 35 requests the control file automatic acquisition unit 52 to acquire them. The acquired markup language file and driver files are added to the memory 31.

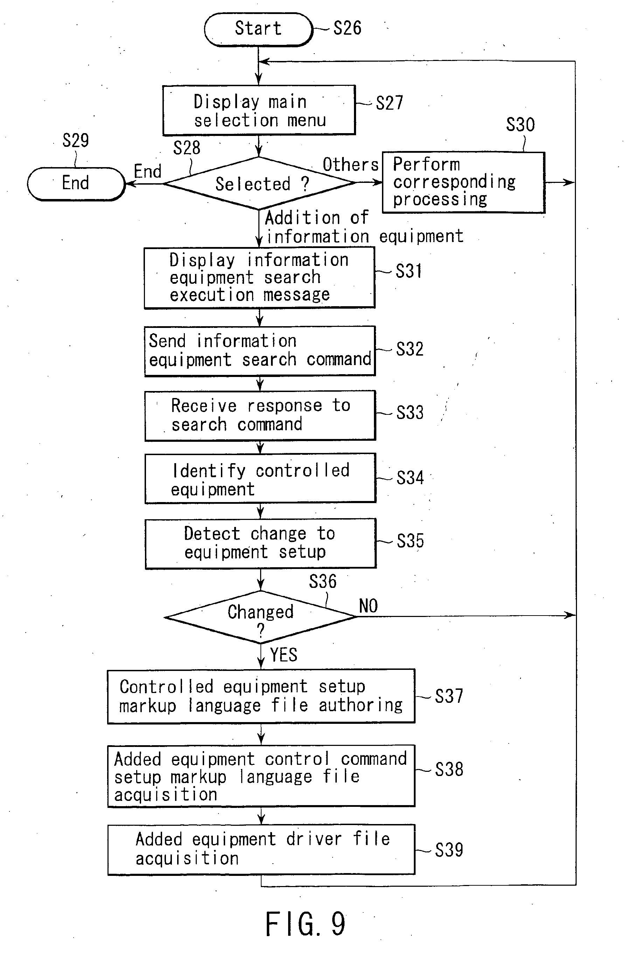

FIG. 9 is a flowchart for the operation when home information equipment is changed or added. First, when the power is applied, the portable information terminal 12 starts processing (step S26). Then, the control unit 35 of the portable information terminal 11 causes the main selection menu to appear on the display unit 38 in step S27.

The control unit 35 determines, in step S28, which of functions was selected by the user from the main menu. If "END" was selected, the control unit terminates processing (step S29). If a function other than addition of the home information equipment is selected, the control unit 35 carries out processing corresponding to that selected function in step S30 and then returns to the processing in step S27.

If the determination in step S28 is that the addition of home information equipment was selected, the control unit 35 displays, in step S31, on the display unit 38 a message to the effect that a search will be made of home information equipment and then sends, in step S32, a command to search home information equipment.

After that, the control unit 35 receives a response to the search command from each home information equipment in step S33, then performs controlled equipment identification processing in step S34 and carries out change-to-controlled-equipment-setup detection processing in step S35.

The control unit 35 makes a determination of whether or not there is a change in controlled equipment in step 536. If the determination is that there is no change (NO), the procedure returns to step S27. If the determination in step S36 is that there is a change in controlled equipment, then the control unit 35 carries out the controlled equipment setup markup language file authoring process in step S37.

After that, the control unit 35 acquires a to-be-added equipment control command setup markup language file in step S38 and then acquires a to-be-added equipment driver file in step S39. The procedure then returns to step S27.

According to the embodiment described above, the addition of the markup language browsing unit 32 and the markup language authoring unit 33 to the portable terminal equipment 12 allows a user interface for control to be added or changed readily. This provides greater freedom in home information equipment control.

In addition, the configurations of the controlled equipment change recognizing unit 34 shown in FIG. 7 and the file acquisition unit 40 shown in FIG. 8 allow the user interface for control to be added or changed automatically, relieving the user of the burden of setup change processing.

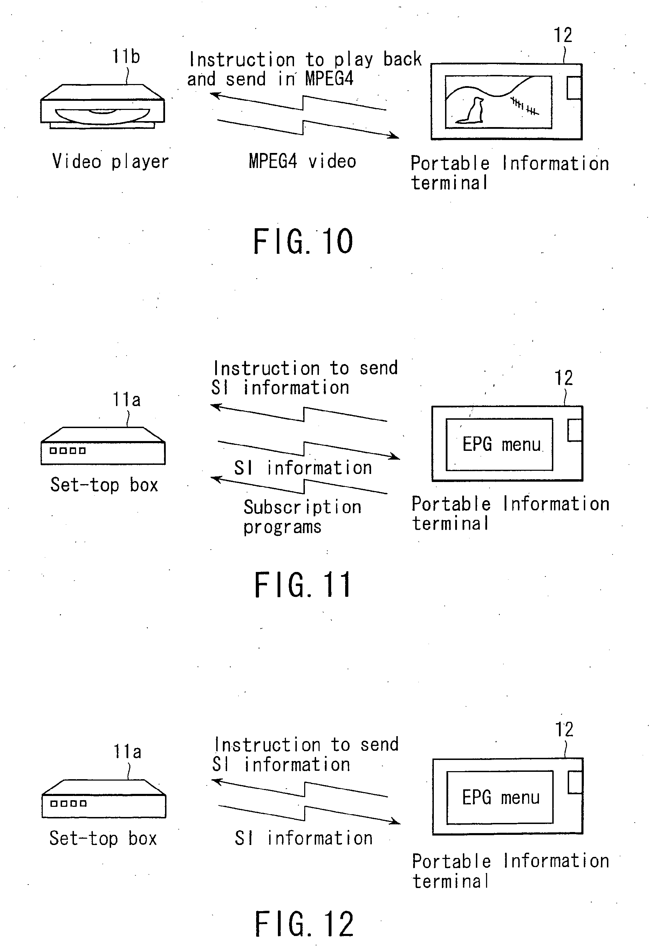

FIGS. 10 to 15 show specific examples of control operations by the portable information terminal 12 on each piece of home information equipment 11a to 11b. First, FIG. 10 shows an example of an MPEG (Moving Picture Experts Group)-4 motion picture reproduction system. As the corresponding home information equipment a video player 11b is used which has an MPEG-4 encoder built in. The portable information terminal 12 has an MPEG-4 video playback function built in.

Upon receipt of a command from the user, the portable information terminal 12 instructs the video player 11b through the markup language browsing unit 32 to play back video and transmit it in MPEG-4 encoded form by radio. The portable information terminal 12 receives MPEG-4 video and decodes it for playback.
Thus, the video can be viewed without attaching a display unit to the video player 11b.

FIG. 11 shows an application of the invention to an electronic program guide (EPG). As the corresponding home information equipment a set-top box 11a is used which is compatible with CS (Communication Satellite) or BS (Broadcasting Satellite)-based digital broadcasting. The portable information terminal 12 has an electronic program guide function built in.

Upon receipt of a command from the user, the portable information terminal 12 instructs the set-top box 11a through the markup language browsing unit 32 to acquire SI information and transmit it by radio. The portable information terminal 12 receives the SI information and then performs the electronic program guide function to accept subscription from the user and send its contents to the set-top box 11a. Thus, the user is allowed to make program subscription through the portable information terminal 12 with better operability than a remote controller for the set-top box.

FIG. 12 shows another application of the invention to an electronic program guide. The set-top box 11a is used as the corresponding home information equipment. The portable information terminal 12 has an electronic program guide function, an MPEG-4 motion picture playback means, a broadcast station selecting function for selecting programs, and so on built in.

Upon receipt of a command from the user, the portable information terminal 12 instructs the set-top box 11a through the markup language browsing unit 32 to acquire wSI information and transmit it by radio. The portable information terminal 12 receives the SI information and then performs the electronic program guide function to accept subscription from the user and make it the program subscription by the portable information terminal itself. This system supposes mobile broadcasting. Thus, each broadcasting station is assumed to simulcast the same programs as terrestrial broadcasting to mobile receivers in MPEG-4 form. Thus, the utilization of SI information for terrestrial broadcasting allows program subscription to be made for mobile broadcasting receivers.

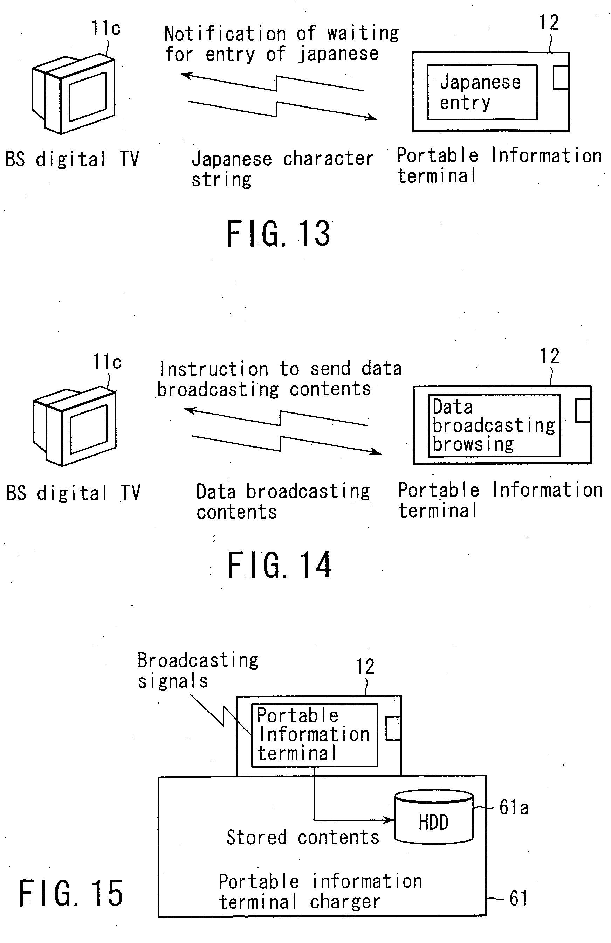

FIG. 13 shows an example of a Japanese entry system. A BS digital television set 11c is used as the corresponding home information equipment and the portable information terminal 12 has Japanese entry means built in, which has a Kana-to-Kanji translation function.

When receiving data broadcasting goes into the character entry state, the BS television set 11c sends a message to the effect that it is in the wait state for Japanese entry. Upon receipt of that message from the BS digital television set 11c, the portable information terminal 12 displays a Japanese entry screen. When the user completes the entry of Japanese, the portable information terminal sends a Japanese character string. Thus, the user is allowed to enter Japanese with the portable information terminal 12 which is generally easier to operate than remote controllers for television sets.

FIG. 14 shows an example of a data broadcasting contents browsing system. The BS digital television set 11c is used as the corresponding home information equipment and the portable information terminal 12 has data broadcasting contents processing means built in, which processes data broadcasting contents into contents of character information alone.

When instructed to send data broadcasting contents by the portable information equipment 12, the BS digital television set 11c sends digital broadcasting contents. The portable information equipment 12 performs browsing by processing data broadcasting contents into contents of character information alone so as not to display object elements. Thus, even the portable information terminal 12 that is lower in resolution than television sets is allowed to browse data broadcasting easily.

FIG. 15 shows an example of a stored-broadcasting compatible system. A portable information terminal charger 61 is provided, which has a hard disk drive (HDD) 61a for use with the portable information terminal 12 built in. Stored-contents acquisition means to acquire stored contents from broadcasting signals is added to the portable information terminal 12. It becomes possible to acquire stored contents during the process of charging the portable information equipment and store them on the HDD 61a. Assuming the charger 61 to be stationary, it can incorporate an HDD of considerably large capacity, allowing stored-type broadcasting to be accommodated.

## Claims

1. A portable information terminal **characterized by** comprising:
a recording unit (31) configured to record' a markup language file for controlling controlled objects;
a recognition unit (34) configured to recognize an addition to, a deletion from, or a change to the controlled objects; and
a control unit (33) configured to change the description of the markup language file recorded on the recording unit (31) on the basis of the results of recognition by the recognition unit (34).

2. A portable information terminal according to claim 1, **characterized in that** the recognition unit (34) comprises:
an identification unit (41) configured to identify automatically the states of the controlled objects through negotiation with the controlled objects; and
a detection unit (42) configured to detect an addition to, a deletion from, a change to the controlled objects by making a comparison between the results of identification by the identification unit (41) and the markup language file stored in the recording unit (31).

3. A portable information terminal according to claim 1, **characterized by** further comprising a file acquisition unit (40) configured to download a control file needed anew for control of the controlled objects from a predetermined server over a network on the basis of the results of recognition by the recognition unit (34).

4. A portable information terminal according to claim 1, **characterized by** further comprising a display unit (38) configured to display a controlled equipment selection menu for making a selection from the controlled objects, and an operating unit (39) configured to select a specific controlled object on the controlled equipment selection menu displayed on the display unit (38).

5. A portable information terminal according to claim 4, **characterized in that** the display unit (38) displays a control command selection menu for controlling the specific controlled object selected by the operating unit (39).

6. A portable information terminal according to claim 1, **characterized in that** the portable information terminal is a mobile television receiver.

7. An equipment which is controlled by a portable information terminal (12) having a recording unit (31) configured to record a markup language file for controlling controlled objects, a recognition unit (34) configured to recognize an addition to, a deletion from, or a change to the controlled objects, and a control unit (33) configured to change the description of the markup language file recorded in the recording unit on the basis of the results of recognition by the recognition unit (34), **characterized by** comprising:
a receiving unit (24) configured to receive control signals output from the portable information terminal (12); and
an operating unit (23) configured to instruct each component to perform a predetermined operation in response to the control signal received by the receiving unit (24).

8. A portable information terminal-based information equipment control system **characterized by** comprising:
a portable information terminal (12) comprising a recording unit (31) configured to record a markup language file for controlling controlled objects, a recognition unit (34) configured to recognize an addition to, a deletion from, or a change to the controlled objects, and a control unit (33) configured to change the description of the markup language file recorded in the recording unit on the basis of the results of recognition by the recognition unit (34); and
information equipment (11a to 11d) comprising a receiving unit (24) configured to receive control signals output from the portable information terminal (12), and an operating unit (23) configured to instruct each component to perform a predetermined operation in response to the control signal received by the receiving unit (24).

9. A portable information terminal-based information equipment control system according to claim 8, **characterized in that** the information equipment (11a to 11d) has a function of performing encode processing to compress motion picture data, the portable information terminal (12) has a function of performing decode processing to reconstruct compressed motion picture data, and wherein the information equipment (11a to lid) sends encoded motion picture data as instructed by the portable information equipment (12) and, upon receipt of the encoded motion picture data, the portable information terminal (12) decodes the encoded motion picture data.

10. A portable information terminal-based information equipment control system according to claim 8, **characterized in that** the information equipment (11a to 11d) has functions of receiving SI 'information from broadcast signals and subscribing to broadcast programs, and the portable information terminal (12) has a function of creating an electronic program guide on the basis of the SI information, and wherein the information equipment (11a to 11d) receives and sends the SI information as instructed by the portable information terminal (12), and the portable information terminal (12) receives the SI information to create the electronic program guide, sends subscription information produced from the created electronic program guide to the information equipment (11a to 11d) to cause it to subscribe to broadcast programs.

11. A portable information terminal-based information equipment control system according to claim 8, **characterized in that** the information equipment (11a to 11d) has a function of receiving SI information from broadcast signals, and the portable information terminal (12) has functions of creating an electronic program guide on the basis of the SI information and receiving broadcast programs, and wherein the information equipment (11a to 11d) receives and sends the SI information as instructed by the portable information terminal (12), and the portable information terminal (12) receives the SI information to create the electronic program guide and receives broadcast programs in accordance with subscription information produced from the created electronic program guide.

12. A portable information terminal-based information equipment control system according to claim 8, **characterized in that** the information equipment (11a to 11d) has a function of receiving data broadcasting, and the portable information equipment (12) has a function of entering Japanese based on Kana-to-Kanji translation, and wherein, when receiving from the information equipment (11a to 11d) notification that it is waiting for entry of Japanese, the portable information terminal (12) sends a Japanese character string entered thereinto to the information equipment (11a to 11d).

13. A portable information terminal-based information equipment control system according to claim 8, **characterized in that** the information equipment (11a to 11d) has a function of receiving data broadcasting contents and the portable information terminal (12) has a function of processing the data broadcasting contents, and wherein the information equipment (11a to 11d) receives and sends the data broadcasting contents to the portable information terminal (12) as instructed by the portable information terminal (12), and the portable information terminal (12) processes the received data broadcasting contents.

14. A portable information terminal-based information equipment control system according to claim 8, **characterized by** further comprising a charging device (61) adapted to charge the portable information terminal (12) and having a contents recording unit (61a) that records stored contents received by the portable information terminal (12).
